# EUROPÄISCHE PATENTANMELDUNG

(11) **EP 2 562 327 A2**
(43) Veröffentlichungstag der Anmeldung: **27.02.2013**
(21) Anmeldenummer: 12181171.5
(22) Anmeldetag: 21.08.2012
(51) Int. Cl.: E04G 5/04

(54) **Gerüstverankerung**

(30) Priorität: 24.08.2011 DE 202011051069 U
(71) Anmelder: Adolf Würth GmbH & Co. KG, 74653 Künzelsau (DE)
(72) Erfinder: Wieland, Achim, 74211 Leingarten (DE); Küenzlen, Jürgen, 71570 Oppenweiler (DE)
(74) Vertreter: Patentanwälte Ruff, Wilhelm, Beier, Dauster & Partner

(57) **Zusammenfassung**

Zur vorübergehenden Befestigung von Baugerüsten an Gebäuden wird vorgeschlagen, eine mit einer Öse als Kopfelement versehene Standardschraube in einen Standarddübel einzuschrauben, der in der Wand des Gebäudes eingesetzt ist. Die Öse kann dann dazu verwendet werden, Sicherungseinrichtungen des Baugerüsts einzuhängen.

## Beschreibung

Die Erfindung betrifft eine Gerüstverankerung.

Bei Arbeiten an Gebäuden werden häufig Gerüste verwendet, die aus Einzelteilen zusammengesetzt sind. Zur Sicherung ist es erforderlich, die Gerüste an der Wand des Gebäudes zu sichern. Hierzu dienen in der Regel Ösenschrauben, die in der Wand befestigt werden. In den Ösen lassen sich dann Sicherungseinrichtungen des Gerüsts einhängen.

Es ist bereits eine Ösenschraube bekannt, die zusammen mit einem aus Kunststoff bestehenden Dübel als vorkonfektioniertes Bauteil zur Verfügung gestellt wird (DE 81 02 670 U1).

Weiterhin ist ein Befestigungselement für Verankerungen in Massivuntergründen bekannt, das einen Schaft mit einem unsymmetrischen Gewinde aufweist, in das eine Schraubenfeder eingelegt wird (EP 1 904 752 B1).

Es ist bekannt, zur Befestigung von Gerüsten einen Dübel mit dem Nennmaß 14 mm und eine Schraube mit dem Nennmaß 12 mm zu verwenden. Übliche Dübel mit dem Nennmaß 14 haben ein Loch von 10 mm und können daher nur mit einer 10 mm Schraube verwendet werden. Es muss also ein spezieller Dübel für diesen bekannten Anwendungsfall hergestellt werden, der ein größeres Loch aufweist.

Der Erfindung liegt die Aufgabe zu Grunde, die Befestigung von Baugerüsten an Gebäuden zu vereinfachen.

Zur Lösung dieser Aufgabe schlägt die Erfindung eine Anordnung mit den im Anspruch 1 genannten Merkmalen vor. Weiterbildungen der Erfindung sind Gegenstand von Unteransprüchen.

Durch die Verwendung eines Standarddübels steht eine große Anzahl von Dübeln zur Verfügung, aus denen für den jeweiligen Anwendungsfall ausgewählt werden kann. Es muss also nicht mehr ein spezieller Dübel produziert und vorgehalten werden. Insbesondere wird ein Kunststoffdübel vorgeschlagen.

In Weiterbildung der Erfindung kann vorgesehen sein, dass die Standardschraube ein nachspreizendes Gewinde aufweist. Derartige nachspreizende Gewinde sind im Stand der Technik bekannt. Ein Beispiel für ein nachspreizendes Gewinde ist in der deutschen Patentanmeldung 10 2008 018 428 beschrieben.

Insbesondere schlägt die Erfindung in Weiterbildung vor, dass der Standarddübel ein Dübel mit Nennmaß 14 mm und/oder die Standardschraube eine Schraube mit dem Nennmaß 10 mm ist.

Die Erfindung schlägt ebenfalls die Verwendung einer derartigen Anordnung zur Befestigung eines Gerüsts an einem Gebäude vor.

Weitere Merkmale, Einzelheiten und Vorzüge der Erfindung ergeben sich aus den Ansprüchen, deren Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: eine Seitenansicht einer Anordnung aus Dübel und Schraube;
- Figur 2: die in den Dübel eingeschraubte Schraube;
- Figur 3: eine weitere Anordnung aus Dübel und Schraube.

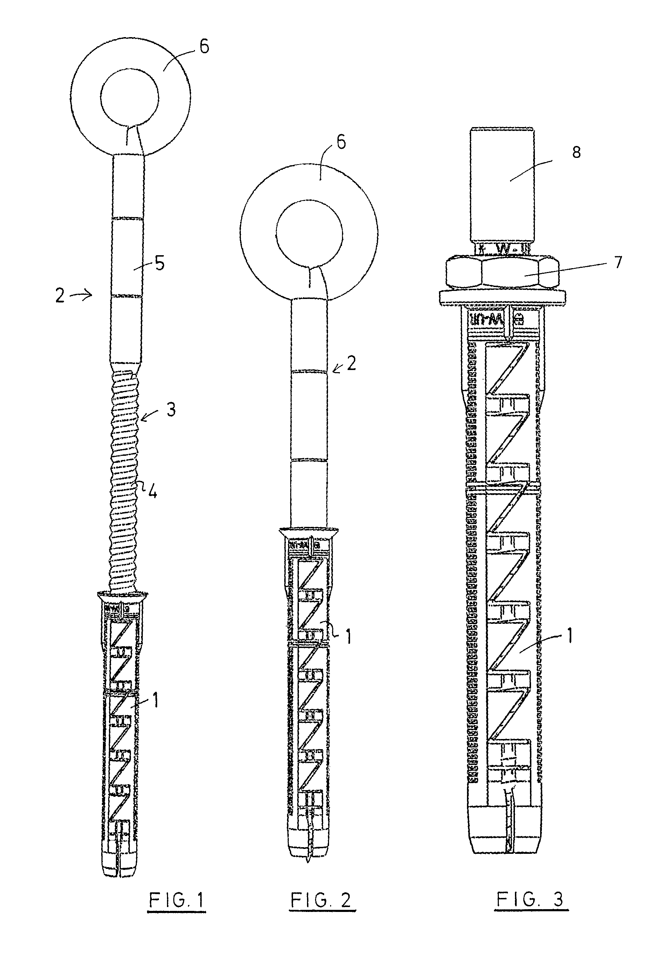

Die in Figur 1 in Seitenansicht dargestellte Anordnung zur Befestigung eines Gerüsts an einem Gebäude enthält einen Standarddübel 1, bei dem es sich in dem als Beispiel dienenden dargestellten Fall um einen Kunststoffdübel handelt. Ein Beispiel für einen solchen Kunststoffdübel ist in der deutschen Offenlegungsschrift 10 2006 023024 beschrieben. In diesen Dübel 1 ist mit ihrem Anfang eine Ösenschraube 2 eingesteckt, aber noch nicht eingeschraubt. Diese Ösenschraube 2 enthält einen Schaft 3, der in seinem vorderen Bereich mit einem nachspreizenden Gewinde 4 versehen ist. An den Gewindebereich des Schafts 3 schließt sich ein glatter Bereich 5 an. An dem äußeren Ende der Ösenschraube 2 ist eine Öse 6 ausgebildet, die als Kopfelement für die Schraube 2 dient. Der glatte Bereich 5 dient zur Einhaltung eines Abstands zwischen der Wandoberfläche des Gebäudes, in der der Dübel 1 eingesetzt wird, und der Öse 6, die zur Befestigung des Gerüsts an dem Gebäude dient.

Die Figur 2 zeigt die Anordnung in einem Zustand, in dem die Ösenschraube 2 vollständig in den Dübel 1 eingeschraubt ist. Zum Einschrauben kann natürlich die Öse 6 selbst dienen.

Die Figur 3 zeigt in vergrößertem Maßstab eine Ausführungsform, bei der eine Schraube ohne den Abstandsbereich 5 verwendet wird. Die Öse 6 ist durch einen Gewindeanschluss 8 mit einem Loch mit einem Innengewinde ersetzt. Ferner weist die Schraube einen Einschraubantrieb 7 in Form eines Sechskants auf. An dem Gewindeanschluss 8 kann wieder eine Öse oder ein anderes Halteelement aufgeschraubt werden.

## Patentansprüche

1. Anordnung zum Befestigen eines Baugerüsts an einem Gebäude, enthaltend
1.1 einen Standarddübel (1),
1.2 eine Standardschraube (2), die
1.3 einen zu dem Standarddübel (1) passenden Gewindeschaft (3) und
1.4 eine Öse (6) als Kopfelement aufweist.

2. Anordnung nach Anspruch 1, bei der der Gewindeschaft (3) der Standardschraube (2) ein nachspreizendes Gewinde (4) aufweist.

3. Anordnung nach Anspruch 1 oder 2, bei der der Standarddübel (1) ein 14er Dübel ist.

4. Anordnung nach einem der vorhergehenden Ansprüche, bei der die Standardschraube (2) eine 10er Schraube ist.

5. Verwendung einer Anordnung nach einem der vorhergehenden Ansprüche zur Befestigung von Gerüsten an Gebäuden.
